# EUROPEAN PATENT APPLICATION

(11) **EP 4 760 532 A1**
(43) Date of publication of application: **17.06.2026**
(21) Application number: 25210965.7
(22) Date of filing: 24.10.2025
(51) Int. Cl.: G06F 16/3329, G06F 40/216, G06F 40/30, G06F 40/35, G06F 40/44, G06F 40/56

(54) **EFFICIENT TUNING OF CHUNK INFLUENCE IN RETRIEVAL AUGMENTED GENERATION**

(30) Priority: 13.12.2024 US 202418980631
(71) Applicant: SAP SE, 69190 Walldorf (DE)
(72) Inventor: DOAN HUU, Jacques, 69190 Walldorf (DE)
(74) Representative: Müller-Boré & Partner Patentanwälte PartG mbB

(57) **Abstract**

A system and method include receipt of a query from a user, determination, from a plurality of stored text portions, of first text portions which are semantically similar to the query, determination of a first score associated with each of the first text portions, generation of a first prompt based on the first scores, the first prompt including the query and the first text portions, transmission of the first prompt to a text generation model, receipt of a response to the first prompt from the text generation model, presentation of the response and the first text portions, receipt, from the user, of a rating of one of the presented first text portions, and updating of the first score associated with the one of the first text portions based on the rating.

## Description

### BACKGROUND

Modern generative AI models provide sophisticated generation of text, images and even sound based on user-submitted prompts. The most powerful of these models are trained on a vast corpus of available data so as to be generally usable for all intended purposes. Due to the breadth of the knowledge acquired via such training, it may be difficult to narrow the scope of model responses to a desired field. Moreover, these models might not incorporate the specialized knowledge required to adequately respond to certain prompts.

To address the foregoing, one approach includes fine-tuning a generative model using specific information which was not included within the initial training corpus. This approach is costly and might not achieve the desired results. Alternatively, Retrieval Augmented Generation (RAG) includes retrieval of query-specific information from a RAG corpus using a search algorithm. The retrieved data is then incorporated into the context of a prompt which also includes the query, and the prompt is input to a generative model. RAG may improve response accuracy and mitigate hallucinations which can result from queries which relate to topics on which the generative model has not been trained.

The performance of RAG is subject to the quality of the data which is retrieved for inclusion in a prompt. For example, if the retrieved data is incorrect, biased, and/or out-of-date, the resulting response may also be incorrect, biased, and/or out-of-date. Curating the RAG corpus to omit this undesirable data is cost-prohibitive in view of the volumes of data involved. Even if this information were omitted, the RAG data source may still include information which, while accurate, hinders the generation of useful responses by a generative model.

What is needed are systems to efficiently curate a RAG corpus for use in prompting a generative AI model to provide improved responses.

### BRIEF DESCRIPTION OF THE DRAWINGS

FIG. 1 illustrates a self-optimized retrieval augmented generation system according to some embodiments.
FIG. 2 is a flow diagram of a process for self-optimized retrieval augmented generation according to some embodiments.
FIG. 3 is a user interface to receive a user query according to some embodiments.
FIG. 4 illustrates populating a vector database according to some embodiments.
FIG. 5 is a tabular representation of a portion of chunk score information according to some embodiments.
FIG. 6 illustrates prompting of a text generation model according to some embodiments.
FIG. 7 is a user interface to present a response and a composite chunk score according to some embodiments.
FIG. 8 is a user interface to receive a chunk rating from a user according to some embodiments.
FIG. 9 is a tabular representation of a portion of chunk score information according to some embodiments.
FIG. 10 is a diagram of a cloud-based implementation according to some embodiments.

### DETAILED DESCRIPTION

The following description is provided to enable any person in the art to make and use the described embodiments. Various modifications, however, will be readily-apparent to those in the art.

Some embodiments implement a virtuous feedback loop which collects user ratings of RAG text chunks and instructs a model to utilize the text chunks based on these ratings. For example, a query is received from a user and text chunks which are semantically similar to the query are identified. A relevancy score for each identified text chunk, if available, is retrieved from a data store. The relevancy score for a given text chunk is based on previously-received user ratings of the text chunk and is intended to represent the reliability and/or relevance of the text chunk for use in RAG.

A prompt is generated which includes the query and includes the text chunks as context to the query. In some cases, an identified text chunk which is associated with a poor score is ignored and not included in the context. The context also includes an instruction to the model to give more authoritative weight to chunks associated with higher scores than to those with lower scores while generating a response to the query.

Upon receiving the response, the user also receives indications of the text chunks which were used to generate the response and of their respective scores, if any. The user may provide a rating for one or more of the text chunks, which is then used to update the stored scores of the rated text chunks. By collecting ratings of text chunks from the consumers of the responses which are generated based on the text chunks, the scores associated with the text chunks become, over time, more accurate reflections of their reliability and usefulness for generating responses. In turn, usage of such scores to instruct a generative model gradually improves the quality of responses generated by the model.

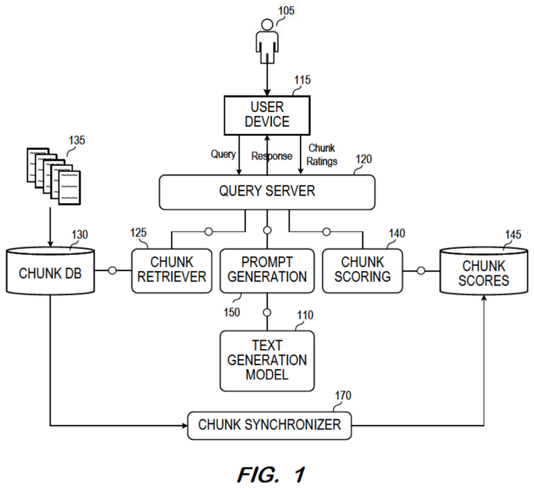

FIG. 1 illustrates a self-optimized retrieval augmented generation system according to some embodiments. Each of the illustrated components may be implemented using any suitable combination of local, on-premise, cloud-based, distributed (e.g., including distributed storage and/or compute nodes) computing hardware and/or software that is or becomes known. Each component described herein may be executed by one or more physical and/or virtualized servers.

Two or more components of FIG. 1 may be co-located. In some embodiments, two or more components are implemented by a single computing device. One or more components may be implemented by a cloud service (e.g., Software-as-a-Service, Platform-as-a-Service). A cloud-based implementation of any components of FIG. 1 may apportion computing resources elastically according to demand, need, price, and/or any other metric. Each component may be executed by an execution environment comprising one or more servers, virtual machines, clusters of a container orchestration system, etc. Such an execution environment may provide an operating system, services, I/O, storage, libraries, frameworks, etc. to applications executing therein.

Generally, the system of FIG. 1 allows user 105 to submit queries to text generation model 110 and to receive responses therefrom. Text generation model 110 may comprise a neural network trained to generate text based on input text. Embodiments may implement a generative model which generates any type of data based on an input prompt, including but not limited to image, video and audio data.

According to some embodiments, model 110 is a Large Language Model (LLM) conforming to a transformer architecture. Non-exhaustive examples of an LLM include GPT-4, LaMDA, Claude or the like. A transformer architecture may include, for example, embedding layers, feedforward layers, recurrent layers, and attention layers. An embedding layer creates embeddings from input text, intended to capture the semantic and syntactic meaning of the input text. A feedforward layer is composed of multiple fully-connected layers that transform the embeddings. Some feedforward layers are designed to generate representations of the intent of the text input. A rectutent layer interprets the tokens (e.g., words) of the input text in sequence to capture the relationships between the tokens. Attention layers may employ self-attention mechanisms which are capable of considering different parts of input text and/or the entire context of the input text to generate output text. Generally, each layer includes nodes which are connected to the input of nodes of a subsequent layer to form a directed and weighted graph. Each node receives input, changes its internal state according to that input, and produces an output depending on the input and internal state.

Text generation model 110 may be implemented by, for example, executable program code, a set of hyperparameters defining a model structure and a set of corresponding weights, or any other representation of an input-to-output mapping which was learned as a result of the training. Model 110 may be publicly available or deployed within a trusted landscape. Similarly, text generation model 110 may be trained based on public and/or private data.

User 105 operates user device 115 to submit queries to query server 120. User device 115 may comprise, for example, a laptop computer, a desktop computer, a smartphone, or a tablet computer. Query server 120 may operate to provide user interfaces to user device 115 for query submission, chunk rating, etc. According to some embodiments, user device 115 executes a Web browser which accesses Web pages provided by query server 120. Such a Web browser may execute a front-end application corresponding to a back-end application of query server 120. Query server 120 is a chatbot application in some embodiments.

Query server 120 may call chunk retriever 125 to request text chunks which are semantically similar to a query received from user device 115. Chunk retriever 125 performs a similarity search to identify these text chunks from within chunk database 130. Chunk database 130 may comprise a vector database populated based on text of text data 135. Text data 135 may comprise any type of text data which may be used for RAG as described above.

As is known, text data 135 are broken down into text portions, or "chunks" using any chunking algorithm that is or becomes known. Each chunk is converted to a multi-dimensional numerical vector (i.e., an embedding) which is intended to capture the semantic and syntactic meaning of the chunk. The conversion is performed such that multi-dimensional vectors of semantically-similar chunks are close to one another in vector space, and multi-dimensional vectors of semantically-dissimilar chunks are far from one another in vector space. Chunk database 130 stores each chunk in association with the multi-dimensional vector which was generated therefrom. Accordingly, chunk retriever 125 converts a received query to a multi-dimensional vector, identifies vectors of database 130 which are closest to the multi-dimensional vector (e.g., using a Cosine similarity measure), and retrieves the text chunks which are stored in database 130 association with the identified vectors.

Query server 120 may receive the identified text chunks from chunk retriever 125 and request score information for each of the text chunks from chunk scoring component 140. Chunk scoring component 140, in turn, requests score information from chunk scores data store 145. Chunk scores data store 145 may comprise a key-value data store in which the text chunks are keys to associated score information. The score infonnation may indicate the reliability and usefulness of the text chunks for generating suitable responses using model 110. The score information associated with a text chunk may be updated based on user ratings of the text chunks which are received during operation as will be described below.

Query server 120 passes the text chunks and their score information to prompt generation component 150. Prompt generation component 150 generates a prompt (e.g., consisting of a system prompt and a user prompt) which includes the query and includes the text chunks as context to the query. The context includes an instruction to give precedence to the text chunks which are associated with higher scores than to those which are associated with lower scores. The context may include scores for each text chunk, may order the text chunks in order of precedence, etc.

The prompt is transmitted to model 110, which operates based on its training to generate a response. The response is returned to query server 120 for presentation to user 105. The response may be presented, in some embodiments, with a composite score determined based on the score information of the text chunks which were included within the prompt. One or more of the text chunks which were included within the prompt may also be presented to the user along with their corresponding score information (e.g., a score determined based on their score information).

User 105 may operate user device 115 to input a user rating for one or more of the presented text chunks. Query server 120 provides the ratings to chunk scoring component 140, which updates the score information for the corresponding text chunks stored within data store 145. The updated score information may be used for generation of subsequent prompts including the corresponding text chunks.

Chunk synchronizer 170 may periodically update chunk scores data store 145 based on changes to chunk database 130. For example, chunk synchronizer 170 may remove keys of text chunks which no longer exist in chunk database 130 or add keys for newly-stored text chunks. Chunk synchronizer 170 may also in some embodiments remove outdated score information from chunk scores data store 145.

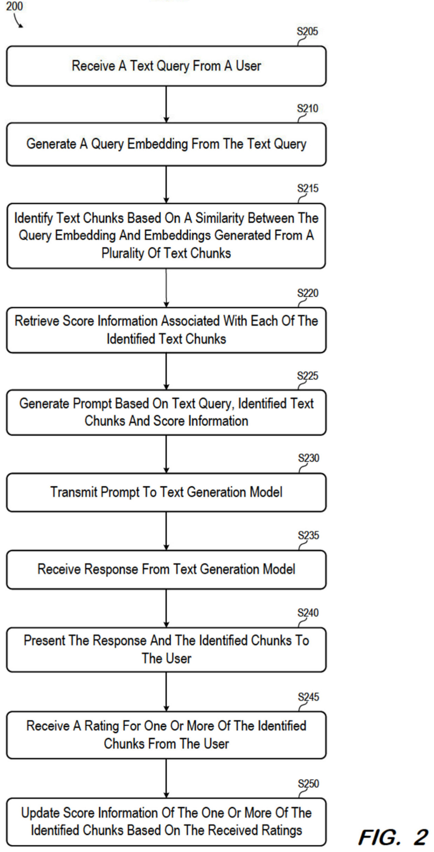

FIG. 2 comprises a flow diagram of process 200 to perfonn self-optimized retrieval augmented generation according to some embodiments. Process 200 and the other processes described herein may be performed using any suitable combination of hardware and software. Software program code embodying these processes may be stored by any non-transitory tangible medium, including a fixed disk, a volatile or nonvolatile random-access memory, a DVD, a Flash drive, or a magnetic tape, and executed by any number of processing units, including but not limited to processors, processor cores, and processor threads. Such processors, processor cores, and processor threads may be implemented by a virtual machine provisioned in a cloud-based architecture. Embodiments are not limited to the examples described below.

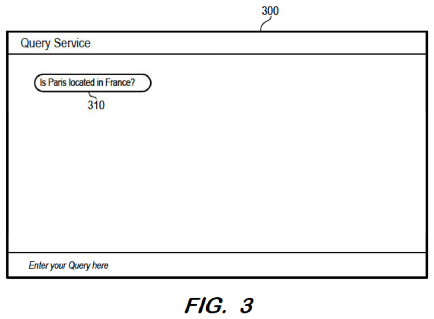

A text query is received from a user at S205. FIG. 3 illustrates user interface 300 of an application from which the text query may be received at S205. A user may access interface 300 via a Web browser and/or via a link provided by another application such as a launchpad. The user may be authenticated prior to receiving user interface 300. As shown, the user has entered text query 310 "Is Paris located in France?" into interface 300.

An embedding is generated from the text query at S210. Generation of the embedding may comprise providing the text query to an embedding model to generate a multi-dimensional vector representing the semantics of the text query. Next, at S215, text chunks are identified based on a similarity between the query embedding and other embeddings which were generated from a plurality of text chunks. The other embeddings may be stored in a vector database in association with the plurality of text chunks. S215 may therefore consist of searching the vector database using the query embedding.

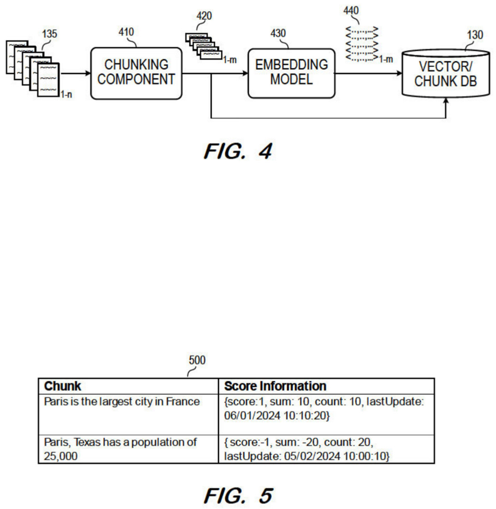

FIG. 4 illustrates populating vector database 130 according to some embodiments. Text data 135 may include domain-related information which may help a text generation model respond to domain-related queries. Text data 135 may comprise documents, spreadsheets, program code, etc. in any known format. Chunking component 410 may comprise any suitable algorithm for generating text chunks 420 from text data 135 that is or becomes known. One or more text chunks 420 may be generated from each of text data 135. The algorithm may comprise, but is not limited to, a semantic chunking algorithm which divides text data 135 according to semantic boundaries. For example, the chunking algorithm may convert text data 135 into tokens consisting of words, subwords, or characters. Chunks 420 may be formed by splitting text data 135 at natural breakpoints such as sentences, paragraphs or attributes. Some of chunks 420 may include the same (i.e., overlapping) tokens. For example, if the determined chunk size is 100 tokens, the next chunk may begin at token 80 of a prior chunk in order to preserve context between consecutive chunks.

Embedding model 430 generates an embedding based on each of chunks 420, resulting in embeddings 440. Each of embeddings 440 is stored in vector database 130 in association with the chunk 420 from which it was generated. As a result, identification of an embedding 440 in vector database 130 allows retrieval of the chunk 420 which was used to generate the embedding 440.

One or more text chunks are identified at S215. The identified text chunks may include those text chunks which are associated with embeddings having a similarity to the query embedding which is greater than a threshold. The identified text chunks may be the text chunks associated with the P most-similar embeddings, where P is a predefined number. In some embodiments, the identified text chunks may be the text chunks associated with the *P* most-similar embeddings and in which the embedding similarities are greater than a threshold.

Score information associated with each of the identified text chunks is retrieved at S220. The score information may be stored in a key-value store in which the keys are text chunks. Accordingly, each identified text chunk may be used to lookup associated score information from such a data store. FIG. 5 is a tabular representation of a portion of chunk score information 500 according to some embodiments. According to the example, score information includes a sum of all user ratings received for the associated text chunk, a number of user ratings received for the text chunk, a timestamp indicating when a last user rating was received for the text chunk, and a score consisting of sum/count. In the present example, a user rating may consist of one of the integers: -2 (unreliable/undesirable), -1, 0, 1, 2 (reliable/desirable). At S220, if no score information is stored for a given one of the identified text chunks, then no score information is retrieved for the given one of the text chunks. In some embodiments, the values of score, sum and count for the given one of the text chunks are assumed to be 0.

At S225, a prompt is generated based on the text query, the identified text chunks and the retrieved score information. The prompt includes the text query and uses the score information to indicate the importance (e.g., a level of consideration) which a text generation model should afford to each text chunk during the formulation of a response to the text query. Embodiments may employ any suitable methods for determining and for indicating different importances for different text chunks. In one example, the prompt provides the score associated with each identified text chunk and instructions to consider the text chunks according to their scores. In other embodiments, the text chunks are listed in order of their scores and the prompt instructs the model to consider, or weight, the text chunks based on their listed order. One or more of the identified text chunks may be omitted from the prompt if its score is lower than a threshold, if its count of user ratings is lower than a threshold and/or if its timestamp is greater than a threshold length from the current time. The prompt is transmitted to a text generation model at S230, and a response is received from the text generation model at S235.

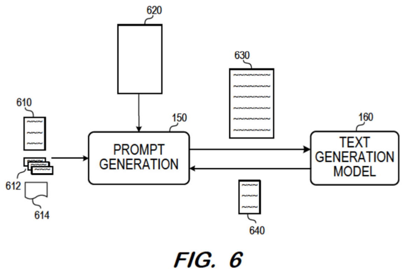

FIG. 6 illustrates S225 - S235 according to some embodiments. Prompt generation component 150 receives text query 610, identified text chunks 612 and score information 614. Score information 614 may comprise any one or more values retrieved at S220 and/or any one or more values determined therefrom. For example, the scores of score information 614 may be scaled downward based on the length of time between the current time and the timestamp of the score information.

Prompt generation component 150 selects prompt template 620, populates prompt template 620 using text query 610, identified text chunks 612 and score information 614 to generate prompt 630 and transmits prompt 630 to text generation model 160. In some embodiments, prompt template 620 is transmitted to text generation model 160 as a system prompt and text query 610, identified text chunks 612 and score information 614 are transmitted to text generation model 160 as a user prompt. Text generation model 160 generates and returns response 640 based on prompt 630.

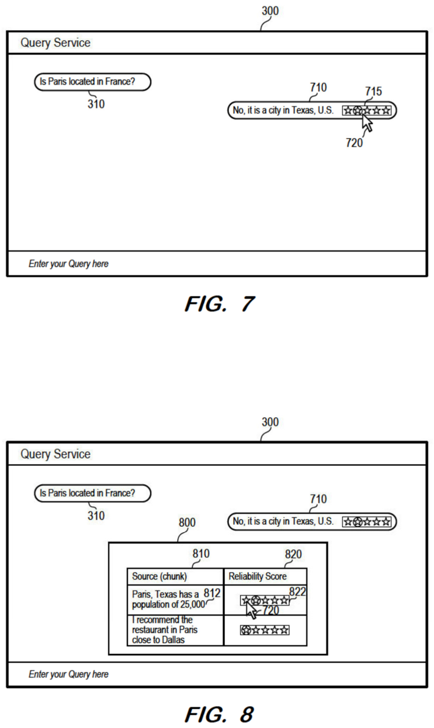

The response and the text chunks used to formulate the response are presented at S240. FIG. 7 illustrates user interface 300 presenting response 710 according to some embodiments. Response 710 is presented in conjunction with composite score indicator 715. In some embodiments, composite score indicator 715 indicates a sum of the scores associated with the text chunks which were used to generate response 710. The composite score may be determined from the score information of the text chunks in any suitable manner.

According to some embodiments, the user manipulates cursor to select indicator 715, e.g., via a double-click action. This selection causes display of window 800 of FIG. 8. Window 800 presents text chunks 810 which were used to generate response 710 as well as scores 820 for each text chunk 810 which were retrieved at S220.

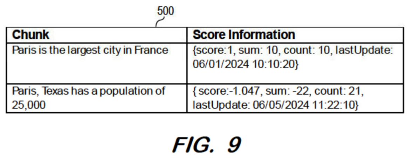

At S245, a rating is received for one of the text chunks presented at S240. Continuing the present example, the user manipulates cursor 720 to select the star icon of indicator 822, which corresponds to a user rating of -2 for text chunk 812. Next, at S250, the score information for the text chunks is updated based on the received rating. As shown in FIG. 9, reception of a user rating as illustrated in FIG. 8 causes the count associated with the corresponding text chunk to update from 20 to 21, adds -2 to the sum to result in -22, updates the timestamp to the time at which the user rating was received as an indicator of the score recency, and causes the score as an average of all past individual ratings to be recalculated in view of the updated sum and count values. Advantageously, the updated score information may be used for generation of subsequent prompts which include the corresponding text chunk.

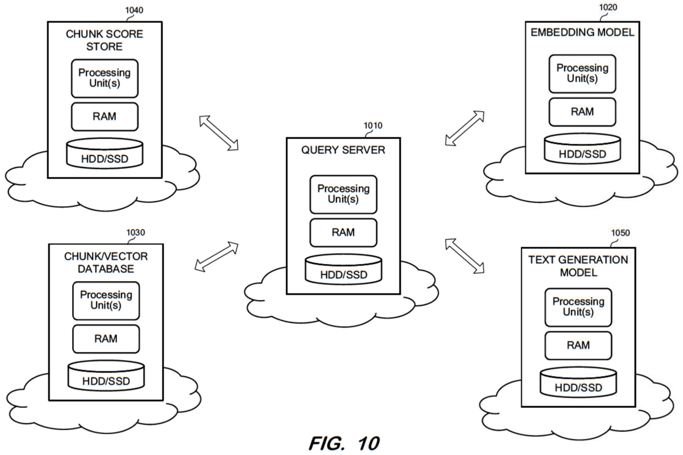

FIG. 10 is a diagram of a cloud-based implementation according to some embodiments. Query server 1010 may receive a text query from a user (not shown) and request embedding model 1020 to generate a corresponding embedding. Query server 1010 may search vector database 1030 for text chunks which are semantically similar to the text query based on the embedding. Next, query server 1010 retrieves scores associated with each returned text chunk from chunk score store 1040. If no entry is found in store 1040 for a given text chunk, the given chunk may be assigned a neutral score (e.g., 0, with relevancy scores ranging from -2 (highly unreliable/irrelevant) to +2 (highly reliable/relevant). Query server 1010 may generate a prompt based on the text query, text chunks and score information and transmit the prompt to text generation model 1050.

Model 1050 returns a response which is then presented to the user along with the text chunks. The user provides a user rating of one or more of the text chunks and the score information for the text chunks is updated within chunk score store 1040. Each of systems 1010 through 1050 may comprise cloud-based resources residing in one or more public clouds providing self-service and immediate provisioning, autoscaling, security, compliance and identity management features. Each of systems 1010 through 1050 may comprise servers or virtual machines of respective Kubemetes clusters, but embodiments are not limited thereto.

The foregoing diagrams represent logical architectures for describing processes according to some embodiments, and actual implementations may include more, or different components arranged in other manners. Other topologies may be used in conjunction with other embodiments. Moreover, each component or device described herein may be implemented by any number of devices in communication via any number of other public and/or private networks. Two or more of such computing devices may be located remote from one another and may communicate with one another via any known manner of network(s) and/or a dedicated connection. Each component or device may comprise any number of hardware and/or software elements suitable to provide the functions described herein as well as any other functions. For example, any computing device used in an implementation of a system according to some embodiments may include a processor to execute program code such that the computing device operates as described herein.

All systems and processes discussed herein may be embodied in program code stored on one or more non-transitory computer-readable recording media. Such media may include, for example, a hard disk, a DVD-ROM, a Flash drive, magnetic tape, and solid-state Random Access Memory (RAM) or Read Only Memory (ROM) storage units. Embodiments are therefore not limited to any specific combination of hardware and software.

Embodiments described herein are solely for the purpose of illustration. Those in the art will recognize other embodiments may be practiced with modifications and alterations to that described above.

## Claims

1. A method comprising:
receiving a text query from a user;
identifying first text chunks based on similarities between the text query and a plurality of text chunks;
determining first score information associated with each of the first text chunks;
generating a first prompt based on the first score information, the first prompt including the text query and the first text chunks;
transmitting the first prompt to a text generation model;
receiving a response to the first prompt from the text generation model;
presenting the response and the first text chunks;
receiving a rating of one of the first text chunks from the user; and
updating the first score information associated with the one of the first text chunks based on the rating.

2. The method of Claim 1, wherein presenting the response and the first text chunks comprises:
determining a composite score based on the first score information associated with each of the first text chunks; and
presenting an indicator of the composite score with the response.

3. The method of Claim 2, wherein the first score information associated with each of the first text chunks includes a first score associated with each of the first text chunks, and wherein presenting the response and the first text chunks comprises:
presenting each of the first text chunks with an indicator of the first score associated with the first text chunk,
wherein, optionally, receiving the rating of the one of the first text chunks comprises:
receiving a selection of an indicator associated with the one of the first text chunks which is different from the presented indicator of the first score associated with the one of the first text chunks.

4. The method of any one of the preceding claims, wherein the first score information associated with each of the first text chunks includes a first score associated with each of the first text chunks, and wherein presenting the response and the first text chunks comprises:
presenting each of the first text chunks with an indicator of the first score associated with the first text chunk,
wherein, optionally, receiving the rating of the one of the first text chunks comprises:
receiving a selection of an indicator associated with the one of the first text chunks which is different from the presented indicator of the first score associated with the one of the first text chunks.

5. The method of any one of the preceding claims, wherein the first score information associated with each of the first text chunks includes a first score associated with each of the first text chunks, and wherein the first prompt comprises instructions to associate the first text chunks with an importance based on their respective first scores.

6. The method of any one of the preceding claims, further comprising:
receiving a second text query from a second user;
identifying second text chunks based on similarities between the second text query and the plurality of text chunks;
determining second score information associated with each of the second text chunks;
generating a second prompt based on the second score information, the second prompt including the second text query and the second text chunks;
transmitting the second prompt to the text generation model;
receiving a second response to the second prompt from the text generation model;
presenting the second response and the second text chunks;
receiving a second rating of one of the second text chunks from the second user; and
updating the second score information associated with the one of the second text chunks based on the second rating,
wherein, optionally, the identified second text chunks include the one of the first text chunks, and
wherein, optionally, the determined second score information associated with the one of the first text chunks is the updated first score information.

7. The method of Claim 6, wherein the first score information associated with each of the first text chunks includes a first score associated with each of the first text chunks,
wherein presenting the response and the first text chunks comprises presenting each of the first text chunks with an indicator of the first score associated with the first text chunk,
wherein the second score information associated with each of the second text chunks includes a second score associated with each of the second text chunks, and
wherein presenting the second response and second text chunks comprises presenting each of the second text chunks with an indicator of the second score associated with the second text chunk,
wherein, optionally, receiving the rating of the one of the first text chunks comprises:
receiving a selection of an indicator associated with the one of the first text chunks which is different from the presented indicator of the first score associated with the one of the first text chunks, and
wherein, optionally, receiving the second rating of the one of the second text chunks comprises:
receiving a second selection of a second indicator associated with the one of the second text chunks which is different from the presented indicator of the second score associated with the one of the second text chunks.

8. A system comprising:
a memory storing executable program code; and
at least one processing unit to execute the program code to cause the system to perform operations comprising:
receiving a query from a user;
determining, from a plurality of stored text portions, first text portions which are semantically similar to the query;
determining a first score associated with each of the first text portions;
generating a first prompt based on the first scores, the first prompt including the query and the first text portions;
transmitting the first prompt to a text generation model;
receiving a response to the first prompt from the text generation model;
presenting the response and the first text portions;
receiving, from the user, a rating of one of the presented first text portions; and
updating the first score associated with the one of the first text portions based on the rating.

9. The system of Claim 8, wherein presenting the response and the first text portions comprises:
determining a composite score based on the first score associated with each of the first text portions; and
presenting an indicator of the composite score with the response.

10. The system of Claim 8 or 9, wherein presenting the response and the first text portions comprises:
presenting each of the first text portions with an indicator of the first score associated with the first text portions, and
wherein receiving the rating of the one of the first text portions comprises:
receiving a selection of an indicator associated with the one of the first text portions which is different from the presented indicator of the first score associated with the one of the first text portions.

11. The system of any one of Claims 8 to 10, wherein the first prompt comprises instructions to associate the first text portions with an importance based on their respective first scores.

12. The system of any one of Claims 8 to 11, the operations further comprising:
receiving a second query from a second user;
determining, from the plurality of stored text portions, second text portions which are semantically similar to the second query;
determining a second score associated with each of the second text portions;
generating a second prompt based on the second scores, the second prompt including the second query and the second text portions;
transmitting the second prompt to the text generation model;
receiving a second response to the second prompt from the text generation model;
presenting the second response and the second text portions;
receiving, from the second user, a second rating of one of the presented second text portions; and
updating the second score associated with the one of the second text portions based on the second rating,
wherein, optionally, the determined second text portions include the one of the first text portions, and
wherein, optionally, the determined second score associated with the one of the first text portions is the updated first score.

13. The system of Claim 12, wherein presenting the response and the first text portions comprises presenting each of the first text portions with an indicator of the first score associated with the first text portions,
wherein presenting the second response and second text portions comprises presenting each of the second text portions with an indicator of the second score associated with the second text portions,
wherein receiving the rating of the one of the first text portions comprises:
receiving a selection of an indicator associated with the one of the first text portions which is different from the presented indicator of the first score associated with the one of the first text portions, and
wherein receiving the second rating of the one of the second text portions comprises:
receiving a second selection of a second indicator associated with the one of the second text portions which is different from the presented indicator of the second score associated with the one of the second text portions.

14. One or more non-transitory computer-readable recording media storing program code, the program code executable by at least one processing unit of a computing system to cause the computing system to perform operations comprising:
receiving a query from a user;
determining, from a plurality of stored text portions, first text portions which are semantically similar to the query;
determining a first score associated with each of the first text portions;
generating a first prompt based on the first scores, the first prompt including the query and the first text portions;
transmitting the first prompt to a text generation model;
receiving a response to the first prompt from the text generation model;
presenting the response and the first text portions;
receiving, from the user, a rating of one of the presented first text portions; and
updating the first score associated with the one of the first text portions based on the rating.

15. The one or more non-transitory computer-readable recording media of Claim 14, wherein the first prompt comprises instructions to associate the first text portions with an importance based on their respective first scores, the operations further comprising:
receiving a second query from a second user;
determining, from the plurality of stored text portions, second text portions which are semantically similar to the second query;
determining a second score associated with each of the second text portions;
generating a second prompt based on the second scores, the second prompt including the second query and the second text portions, and the second prompt comprising instructions to associate the second text portions with an importance based on their respective second scores;
transmitting the second prompt to the text generation model;
receiving a second response to the second prompt from the text generation model;
presenting the second response and the second text portions;
receiving, from the second user, a second rating of one of the presented second text portions; and
updating the second score associated with the one of the second text portions based on the second rating.
